# EUROPEAN PATENT SPECIFICATION

(11) **EP 4 514 723 B1**
(45) Date of publication and mention of the grant of the patent: **15.04.2026**
(21) Application number: 22726632.7
(22) Date of filing: 29.04.2022
(51) Int. Cl.: B65G 23/22

(54) **CONVEYOR DRIVE SYSTEM**
ANTRIEBSSYSTEM FÜR FÖRDERER
SYSTÈME D'ENTRAÎNEMENT DE TRANSPORTEUR

(43) Date of publication of application: 05.03.2025
(73) Proprietor: ABB SCHWEIZ AG, 5400 Baden (CH)
(72) Inventor: RICHTER, Ulf, 03048 Cottbus (DE); SALAMOUN, Jakub, 73932 Vratimov (CZ); CAPLA, Radim, Ostrava 721 00 (CZ)
(74) Representative: Zimmermann & Partner Patentanwälte mbB
(86) International application number: PCT/EP2022/061478
(87) International publication number: WO 2023/208360

(56) References cited:
- EP-A1- 2 727 861
- CN-U- 212 785 022
- ABB INDUSTRY SOLUTIONS ET AL: "Gearless Conveyor Drives", 10 March 2014 (2014-03-10), pages 1 - 26, XP093008832, Retrieved from the Internet <URL:https://higherlogicdownload.s3-external-1.amazonaws.com/SMENET/SME%202014%20Applying%20the%20Benefits%20of%20High%20Powered%20Gearless%20Conveyor%20Drives%20to%20Conveyors%20using%20Medium%20Power%20Drives.pdf?AWSAccessKeyId=AKIAVRDO7IEREB57R7MT&Expires=1671118069&Signature=udTkLAfp7TQQvBmWd3+C964JK> [retrieved on 20221215]

## Description

### TECHNICAL FIELD

The present invention relates to a conveyor drive system, in particular for an industrial conveyor installation, e.g., for mining or other bulk material handling applications, and to a method of installing the same. In particular, the present invention relates to a conveyor drive system having a gearless motor, and a method of installing the same.

### BACKGROUND ART

Conveyor drive systems using gearless motors are known. One type of conveyor drive system using a gearless motor is a conveyor drive system using a shaft-mounted gearless motor, for example, as disclosed in EP 3 767 802 A1. In such a system, the gearless motor is mounted onto the pulley shaft which drives the conveyor belt, such that the pulley shaft supports the gearless motor. In this way, good alignment between the pulley shaft and the gearless motor can be simply and rapidly obtained.

However, in system with shaft-mounted motor, the pulley shaft and its support must be made sufficiently strong to support the motor. In particular, when mounting a gearless motor on an existing conveyor drive system, it may become necessary to modify the existing structure of the drive system, for example by reinforcing the pulley shaft, bearings and other parts of the conveyor installation. This can be time-consuming and costly.

Other conveyor drive systems may use motors installed on a foundation with an integrated steel sole plate interface or on a steel base frame. Because the motor is not mounted on the pulley shaft, alignment of the motor shaft and the pulley shaft becomes critical. The adjustment can be obtained, for example, using permanent and dedicated adjustment provisions, such as a spindle, or eccentric jack points, to adjust the whole frame. An example of such as system is disclosed in EP 2727861 Al.

In such a system, it can be difficult and time-consuming to align the motor shaft with the pulley shaft. However, when installing the drive unit, for example in a mining environment, the alignment may have to be done under unfavorable ambient circumstances and time is generally of critical importance. Therefore, therefore rapid and easy alignment and installation are desirable.

CN212785022U provides a permanent magnet synchronous motor-based permanent magnet motor mounting structure for a fixed belt conveyor, relates to the technical field of belt transmission, and solves the problems that the axes of a motor and a driving belt pulley are not parallel to the axis of a driven belt pulley, the service life of a belt is influenced by long-time movement, meanwhile, danger is caused, and the service life of the belt is influenced in the prior art. And unnecessary personal and property losses are caused. The device is technically characterized by comprising a motor mounting plate, wherein a motor is fixedly mounted above the motor mounting plate; the fixing plate is located below the motor mounting plate and fixedly connected with an external frame body, and the fixing plate is fixedly connected with the motor mounting plate through screws; a horizontal adjusting device for adjusting the levelness of the motor mounting plate is also arranged between the fixing plate and the motor mounting plate; tension adjusting devices used for adjusting the tension of the belt are further installed on the fixing plate and on the two sides of the motor installation plate. The belt conveyor has the advantages that the normal service life of the belt is guaranteed, and meanwhile unnecessary personal and property losses are avoided.

The non-patent document ABB Industry Solutions ET AL: "Gearless Conveyor Drives", 10 March 2014 (2014-03-10), XP093008832, discloses a synchronous motor design with bearings, where the motor comes as a separate unit, a *"standard"* pulley, with a large flexible coupling required. Also disclosed is a flange/shaft mounted motor.

### PROBLEM TO BE SOLVED

The present invention was made in view of overcoming the above problems of the prior art. Specifically, the objective of the present invention is to provide a conveyor drive system including a gearless motor, which does not require major modifications of a conveyor installation, and which also allows relatively easy and quick alignment of the gearless motor with the pulley shaft.

### SUMMARY OF INVENTION

The objective of the present invention is achieved by a conveyor drive system, an industrial conveyor installation, and a method of installing a conveyor drive system as described in the claims.

An aspect of the invention is a conveyor drive system for an industrial conveyor installation, the conveyor drive system comprising: a pulley shaft configured to drive a conveyor belt of the conveyor installation; a gearless motor for gearlessly driving the pulley shaft, the motor comprising a motor shaft and a motor housing having a mounting section; a base frame for supporting the motor; a first alignment portion, wherein the motor is mounted with its mounting section on the base frame, the first alignment portion being provided between the mounting section and the base frame for adjusting the motor at least vertically relative to the base frame; a support structure configured for supporting the base frame, the support structure comprising a first support member and a second support member , the first support member and the second support member being spaced apart from each other in a direction perpendicular to an axial direction of the motor shaft; a second alignment portion being provided between the first support member and the base frame for adjusting the base frame at least vertically relative to the first support member; a connecting portion connecting the base frame to the second support member; and a coupling gearlessly coupling the motor shaft to the pulley shaft.

Another aspect of the invention is an industrial conveyor installation having a conveyor belt and a conveyor drive system as described above.

Another aspect of the invention is a method of installing the conveyor drive system of the invention in an industrial conveyor installation, the method comprising the steps of: (a) mounting the support structure comprising the first support member and the second support member to a conveyor installation frame of the conveyor installation; (b) positioning the base frame, with the motor mounted thereon, in alignment with the first support member and connecting the base frame to the second support member by the connecting portion; (c) adjusting the second alignment portion for coarse alignment of the motor shaft with the pulley shaft, and mounting the base frame to the first support member via the second alignment portion; (d) adjusting the first alignment portion for fine alignment of the motor shaft with the pulley shaft; and (e) coupling the motor shaft to the pulley shaft by the coupling.

An advantage of these aspects is that an easy and quick alignment of the gearless motor with the pulley shaft becomes possible, in particular due to the first and second alignment portions and to die coupling between the motor shaft and the pulley shaft. Thereby, the motor shaft can be aligned with the pulley shaft in multiple stages. For example, the second alignment portion, which is provided between the support structure (first support member) and the base frame, can be used for adjusting the base frame, and the motor mounted thereon, relative to the support structure, so that an initial alignment (with an initial tolerance) of the motor shaft with the pulley shaft is achieved. Then, the first alignment portion, which is provided between the motor (mounting section) and the base frame, can be used for adjusting the motor relative to the base frame, so that the alignment of the motor shaft with the pulley shaft is improved, e.g., the tolerance is reduced to a residual tolerance. This reduced residual tolerance - which may also include inevitable load- or temperature-dependent misalignments during operation - may then be sufficiently small to be compensated by the coupling which gearlessly couples the motor shaft to the pulley shaft.

The conveyor drive system of the present invention may be applied to an industrial conveyor installation having a conveyor belt and a conveyor drive system for driving the conveyor belt via the pulley shaft. It may be applied to a heavy-duty conveyor installation, preferably a mining conveyor installation, or a mining conveyor system of medium power.

For example, the conveyor may have a power of 200 kW to less than 2500 kW single motor power, but the motor power may also be 2500 kW or more, and preferably no more than 10 MW or less. The conveyor may, for example, be operated in an open-cast mine, or an underground mine, for example in pit or overland conveyors. The conveyor may be applied to bulk material handling operations such as stockpiles, material handling terminals or processing plants.

The gearless motor may be a low speed torque motor. Examples of a low speed gearless motor are motors, with a rated speed of 30 to 130 rpm, and preferably not more than 200 rpm. Examples of the type of gearless motor which may be used are permanent magnet type, a synchronous motor type with external excitation, an induction motor type, a liquid cooled motor, or an air cooled motor.

The gearless motor may be an electric motor, and it may include a rotor and a stator. The rotor may be co-rotationally (rigidly) coupled to the motor shaft. The motor may be a permanent-magnet motor, a synchronous motor, or an induction motor.

The housing of the gearless motor includes a mounting section. The mounting section may be positioned at the lower portion of the motor. For example, the feet may be in the lower half of the motor frame, and/or may be raisable up to the horizontal shaft symmetry axis. In other words, the feet may be raised up to the height of the motor shaft. The mounting section may comprise at least one foot. Any number of feet may be used, but 3 or 4 feet are preferable. A height adjustment member, for example one or more shim plates, may be provided below each foot.

The base frame supports the motor. The base frame may be made of a material such as steel or the like. A platform or surface of the base frame which supports the motor may be disposed essentially horizontally (e.g, with a deviation of less than 15° from the horizontal plane).

Because the frame supports the motor, the pulley shaft and the structures supporting the pulley shaft of the conveyor installation do not require additional reinforcements. Preferably, the pulley shaft supports less than 50%, preferably less than 10%, and more preferably less than 5% of the weight of the gearless motor, or a total weight of the gearless motor and the base frame. More preferably, the weight of the motor and of the base frame is essentially completely supported by the support structure. Thereby, it is possible to use a coupling which compensates for misalignment between the motor shaft and the pulley shaft, such as a flexible coupling.

The first alignment portion is provided between the mounting section of the gearless motor, and the base frame. The first alignment portion allows adjusting the motor at least vertically relative to the base frame. The first alignment portion may include a height adjustment member. The height adjustment member may allow for adjustment in discrete steps, for example, one or more shims. The shims may be inserted between the mounting section and the base frame for alignment of the motor. Alternatively, the height adjustment member may allow for continuous adjustment, such as a hydraulic adjustment member. In the method of installing the conveyor drive system, an initial height adjustment member allowing for continuous adjustment may be replaced by a discrete height adjustment member such as shims during installation. More generally, the first alignment portion may also include devices such as shims or hydraulic devices, spindles or screws to allow at least vertical, and optionally, horizontal adjustment of the motor.

The first alignment portion may be arranged below the mounting section, preferably directly below the mounting section and/or in direct contact with the mounting section. For example, if the first alignment portion includes four feet, respective shim stacks may be inserted between each of the feet and the base frame, and the number or thickness of shims of each shim stack (for each foot) may differ, to allow vertical adjustment of the motor. Each one of the shim stacks may have at least one shim, which confirms that the shim stacks are not only provided for aligning the feet to each other, but for height adjustment of the motor as a whole.

The first alignment portion may also include a horizontal adjustment member for horizontal adjustment of the motor, such as long holes or sliders arranged in the base frame for horizontally adjusting the positions at which the motor feet are fixated (e.g., screwed) on the base frame.

The base frame is supported by the support structure, which comprises a first support member and a second support member. The support structure may be fixedly mounted to be able to support the base frame with the motor mounted thereon, and to be itself directly or indirectly supported by the ground. For example, the support structure may be fixedly mounted to a conveyor installation frame (which may also - possibly indirectly - support the pulley shaft and possibly other parts of the conveyor), or may be mounted to a foundation on the ground. The first and second support members may be individually or jointly mounted.

The first support member and the second support member are spaced apart from each other in a direction perpendicular to the axial direction of the motor shaft. Thus, a line between the first and second support members (defined as a line between their centers) has at least a component in the direction perpendicular to the axial direction of the motor shaft, but may still be at an angle with that direction. Preferably, the angle is less than 30°.

The first support member may be provided closer to the motor shaft than the second support member in a horizontal direction perpendicular to the motor shaft. In this way, the first support member may support a greater portion of the weight of the gearless motor than the second support member, and/or a (height) adjustment at the first support member may be particularly effective for aligning the motor shaft.

The first support member and/or the second support member may be provided below the base frame, but are not limited to this arrangement. The first support member and/or the second support member could alternatively be provided above the base frame, or at substantially the same height as the base frame. The first support member may support the base frame from below, from a side, or from above, and the second support member, independently of the position of the first support member, may support the base frame from below, from a side, or from above.

The base frame is preferably connected to the support structure by a three-support connection, having no more than three supports (which may be, in an idealized representation, represented as support points) connecting the base frame to the support structure. In a three-support connection, preferably, the three supports are arranged in a triangular layout when viewed from above.

In a three-support connection, the support structure may have two supports at the first support member, and one support at the second support member. In this case, the two first support members are preferably spaced apart in a horizontal direction parallel to the axis of the motor shaft. The base frame may be connected to the first support member via two second alignment portions which provide the two supports, and connected to the second support by the connecting portion which provides one support.

In particular, two supports of the three-point support may connect the base frame to the first support member. More specifically, two supports of the three-point support may connect to the first support member by the second alignment portions. One support of the three-support connection may connect the base frame to the second support by the connecting portion. The three-support configuration may advantageously support the base frame in a simple, easily and rapidly aligned manner without risk of mismatch or instability, in the same manner that a table having three legs is particularly stable.

The support structure, including the first support member and the second support member, may be made of steel, such as steel beams, and/or concrete.

The second alignment portion is provided between the first support and the base frame, and allows adjustment of the base frame relative to the first support. The second alignment portion may include a height adjustment member, for example, one or more shims. The shims may be inserted between the first support and the base frame for at least vertical alignment of the base frame. The second alignment portion may be arranged below the base frame. The second alignment portion may also include a horizontal adjustment member, for example long holes or a slider.

Preferably, the second alignment portion can provide coarse adjustment and the first alignment portion can provide fine adjustment. For example, the first alignment portion may use shims which are no thicker, and preferably thinner shims, than the second alignment portion, and/or may have a smaller range of vertical adjustment than the second alignment portion. By providing a coarse alignment as well as a fine alignment at least in the vertical direction, it becomes possible to easily and rapidly obtain accurate alignment. In particular, it becomes possible to rapidly and accurately align the axis of the motor shaft coaxially with the axis of the pulley shaft.

The connecting portion connects the base frame to the second support. The connecting portion may be a fixed connection. The fixed connection may be a bolted connection. The fixed connection preferably provides a fixed connection between the first support member (41) and the base frame (10).

Alternatively, the connecting portion may be a pivot connection with at least one degree of freedom. The pivot may preferably have a pivot axis parallel to the axis of the motor shaft or pulley shaft, and/or perpendicular (in a right-angle (or at any angle) to the pulley shaft) to allow movement in a horizontal direction of the base frame relative to the second support. The pivot may also be adjustable in a horizontal direction, to allow positioning in a horizontal direction of the base frame relative to the second support for installation. For example, the connecting portion may be a universial joint, cardan joint, hinge bearing, plain bearing, spherical bearing, or the like.

The coupling is provided to gearlessly couple the motor shaft to the pulley shaft. The coupling can compensate for any misalignments between the motor shaft and the pulley shaft. For example, such misalignments may be residual misalignments, e.g,, associated with smaller tolerances or misalignments than the fine adjustment provided by the first alignment portion. Such residual misalignments may also arise during operation of the conveyor belt, due to the load carried by the conveyor belt, the torque applied to the pulley shaft, thermal expansion, and/or the like.

The misalignment may thus be referred to as a residual misalignment, such as a misalignment remaining after the conveyor drive system has been installed, and which is smaller than a vertical and/or horizontal adjustment range, or adjustment precision, of the first alignment portion.

The misalignment may be an axial, radial, and/or angular misalignment of the motor shaft with respect to the pulley shaft, and preferably, the coupling can compensate for such axial, radial, and/or angular misalignments.

A coupling which can compensate for misalignments may be, for example a flexible coupling. Preferable types of flexible coupling are gear couplings, steel laminae couplings, flexible jaw couplings, or the like. Other types of couplings which can compensate for misalignments are disc or membrane couplings or servo couplings.

A disc brake may be provided between the gearless motor and pulley. The disc brake may, for example, be integrated with the pulley shaft. The disc brake may comprise a floating brake caliper to compensate for brake disc displacement, and/or the disk brake may comprise a brake stand with a connected brake which is adjustable for alignment with the brake disk. The adjustment of the floating brake caliper and/or the brake stand with connected brake may be in the vertical and/or horizontal directions.

In addition to the gearless motor, a liquid cooler unit (CU) and other devices may be installed on the base frame.

When installing the conveyor drive system in an industrial conveyor installation, the conveyor drive system may be installed with the support structure stably supported (possibly indirectly) by the ground. This may for example be achieved by mounting the support structure to a conveyor installation frame of the conveyor installation.

Then, the base frame, with the motor mounted thereon, may be positioned in alignment with the first support member and connected to the second support member. For example, a crane may be used to position and temporarily support the base frame carrying the motor, while the base frame is connected to the second support member. Then, the base frame may be mounted to the first support member via the second alignment portion, whereby the second alignment portion is adjusted (e.g., by inserting an appropriate shim plate stack) for coarse alignment of the motor shaft (22) with the pulley shaft (2). Thereafter, the crane may be uncoupled and removed.

After the second alignment portion has been adjusted, the first alignment portion is adjusted for fine alignment of the motor shaft with the pulley shaft. The adjustment may be performed by providing appropriate shim plate stacks.

In a particular example, an initial first adjustment member may be provided (e.g., pre-installed) between the mounting section of the motor and the base frame for adjusting the motor relative to the base frame. The initial first adjustment member may allow for continuous (vertical and optionally also horizontal) adjustment, and may for example include a hydraulic adjustment system. The initial first alignment member may be adjusted for fine alignment of the motor shaft with the pulley shaft. Then, the initial first alignment member may be replaced by a permanent first alignment member such as a discrete height adjustment member (e.g., respective shim plate stacks), whereby the height of the permanent first alignment member is selected to match the height provided by the initial first alignment member.

After the first alignment portion has been adjusted in this manner, the motor shaft may be coupled to the pulley shaft by the (flexible) coupling.

### DRAWINGS

Fig. 1 is a schematic side view showing components of an aspect of the conveyor drive system.
Fig. 2 is a schematic top view of the aspect of the conveyor drive system.
Fig. 3 is a perspective view showing a support structure including the first and second support members of the conveyor drive system.

### EMBODIMENTS OF INVENTION

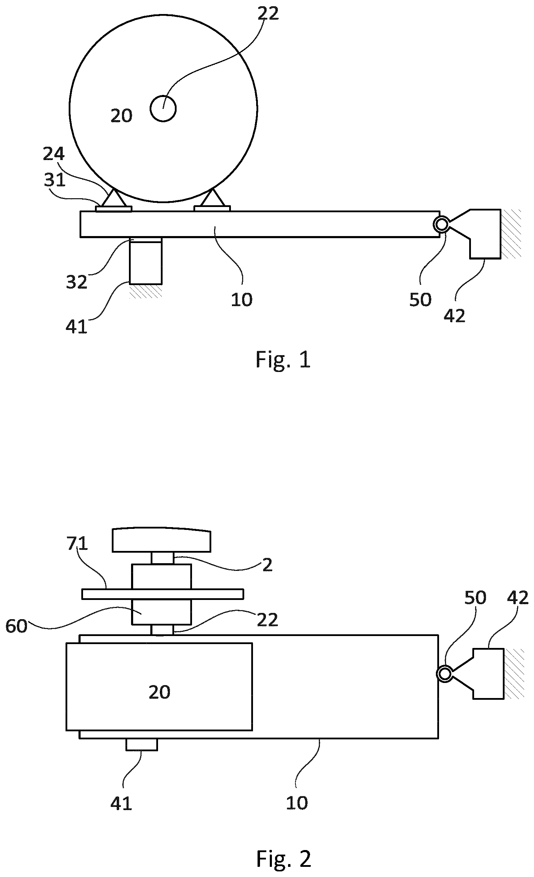

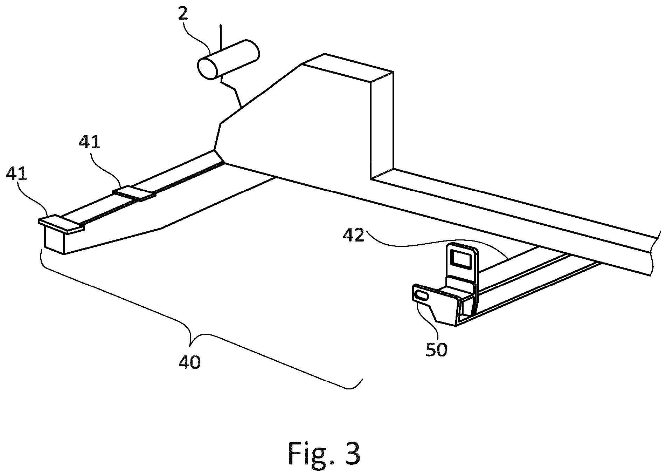

As shown in Fig. 1, a base frame (10) is provided for supporting the gearless motor (20). Near one end of the base frame (10), and below the base frame (10), two first supports (41) are provided, spaced apart in a direction parallel to the axis of the motor shaft (22). A configuration of two first supports (41) spaced apart in a direction parallel to the axis of the motor shaft (22) is shown in perspective in Fig. 3.

A second alignment portion (32) is provided between each of the first supports (41) and the base frame (10). These second alignment portions (32) include shims which are inserted between the first supports (41) and the base frame (10), to provide coarse alignment of the base frame (10) at least vertically. In this way, the alignment portions (32) can provide coarse vertical horizontal alignment the motor shaft (22) with the pulley shaft (2). The number or thickness of the shims of each second alignment portion (32) may be different, to provide better alignment of the motor shaft (22) towards the pulley shaft (2). Optionally, a horizontal alignment means, such as jacking bolts or the like, may also be provided at the alignment portions (32) for horizontal alignment of the base frame (10).

At the other end of the base frame (10), the connecting portion (50) is provided to connect the base frame (10) to the second support (42). As shown in Fig. 1, the connecting portion (50) is a pivot connection.

In this way, the two first supports (41) and the connecting portion (50) form a three-support connection between the base frame (10) and the support structure (40). The pivot can follow the adjustments made by the second alignment portions (32) while supporting one end of the base frame (10). This provides a simple structure which can achieve relatively easy and fast alignment of the base frame (10). As a result, fast and easy coarse alignment of the motor shaft (22) and the pulley shaft (2) can be achieved when installing the conveyor drive system.

The housing of the gearless motor (20) includes the mounting section (24) comprising four feet (only the two feet closer to the viewer are shown). A first alignment portion (31) is provided between each of the feet, and the base frame (10). The first alignment portions (31) can provide fine adjustment of the gearless motor (20), so that the motor shaft (22) can be finely coaxially aligned to the pulley shaft (2).

The coupling (60) is a flexible coupling which can compensate for misalignments between the motor shaft (22) and the pulley shaft (2). Such misalignments may arise during operation of the conveyor, for example, due to the load carried by the conveyor, the tension of the conveyor belt, the torque applied to the conveyor, or the like. Alignments may also arise due to thermal expansion/contraction of the conveyor installation or the like. The flexible coupling allows the operation of the conveyor despite such misalignments.

As shown in Fig. 2, the conveyor drive system may also be provided with a disc brake, having a brake disc (71), between the gearless motor (20) and the pulley shaft (2). The disc brake of this embodiment includes a floating brake caliper (not shown) to compensate for displacements of the brake disc (71).

When installing the conveyor drive system of this embodiment in an industrial conveyor installation, first, the support structure (40) including the first supports (41) and second support (42) are mounted to the conveyor installation frame. Then, the base frame (10), with the motor (20) mounted thereon, is positioned above the first support (41), and the base frame (10) is connected to the second support (42) by the connecting portion (50).

As shown in Fig. 3, the connecting portion (50) is a pivot connection which includes a slit which receives a bolt, such that the bolt has its axis parallel to the axis of the motor shaft (22), to connect the base frame (10) to the second support (42). In this way, the base frame (10) can pivot along the axis of the bolt, and can also move horizontally in the lengthwise direction of the slit, to follow the alignment of the second alignment portion (32) in the next step.

Then, the second alignment portions (32) are adjusted by inserting shims, for coarse alignment of the motor shaft (22) with the pulley shaft (2), and the base frame (10) is mounted on the first support (41).

Then, fine alignment is carried out by adjusting the first alignment portion (31) for fine alignment of the motor shaft (22) with the pulley shaft (2), so that the motor shaft (22) is coaxial with the pulley shaft (2), and the motor shaft (22) is coupled to the pulley shaft (2) by the flexible coupling (60).

This provides the advantages that the base frame needs to be shimmed in only the two positions of the second alignment portions (32). The pivot connection of the connecting portion (50) allows rotational movement in the pivot point which reduces the number of shim connections to the two second alignment portions (32). This three-support arrangement provides easier alignment than, for example, a four-support alignment with two first support connections and two second support connections.

By providing both the first alignment portion (31) and the second alignment portion (32), it is possible to easily and rapidly align and install the base frame (10). After the mounting of the base frame (10) has been achieved, the fine adjustment of the motor shaft (22) to the pulley shaft (2) can be carried out.

In this way, it is possible to achieve easy and rapid installation of a conveyor drive system (1) including a gearless motor (20) without major modification of an existing conveyor installation.

### REFERENCE SYMBOLS

- 1: conveyor drive system
- 2: pulley shaft
- 10: base frame
- 20: gearless motor
- 22: motor shaft
- 24: mounting section
- 31: first alignment portion
- 32: second alignment portion
- 40: support structure
- 41: first support
- 42: second support
- 50: connecting portion
- 60: coupling
- 71: brake disc

## Claims

1. A conveyor drive system (1) for an industrial conveyor installation, the conveyor drive system (1) comprising:
a pulley shaft (2) configured to drive a conveyor belt of the conveyor installation;
a gearless motor (20) for gearlessly driving the pulley shaft (2), the motor (20) comprising a motor shaft (22) and a motor housing having a mounting section (24);
a base frame (10) for supporting the motor (20);
a first alignment portion (31), wherein the motor (20) is mounted with its mounting section (24) on the base frame (10), the first alignment portion (31) being provided between the mounting section (24) and the base frame (10) for adjusting the motor (20) at least vertically relative to the base frame (10);
a support structure (40) configured for supporting the base frame (10), the support structure (40) comprising a first support member (41) and a second support member (42), the first support member (41) and the second support member (42) being spaced apart from each other in a direction perpendicular to an axial direction of the motor shaft (22);
a second alignment portion (32) being provided between the first support member (41) and the base frame (10) for adjusting the base frame (10) at least vertically relative to the first support member (41);
a connecting portion (50) connecting the base frame (10) to the second support member (42); and
a coupling (60) gearlessly coupling the motor shaft (22) to the pulley shaft (2), and compensating for misalignment between the motor shaft (22) and the pulley shaft (2).

2. A conveyor drive system (1) according to claim 1, wherein the first and second alignment portions (31, 32) are adjusted for aligning the motor shaft (22) coaxially with the pulley shaft (2), and optionally,
wherein the second alignment portion (32) is configured to provide coarse adjustment and the first alignment portion (31) is configured to provide fine adjustment, and/or a vertical adjustment range of the second alignment portion (32) is larger than a vertical adjustment range of the first alignment portion (31).

3. A conveyor drive system (1) according to any one of the preceding claims, wherein the first alignment portion (31) is arranged below the mounting section (24) and the second alignment portion (32) is arranged below the base frame (10),
and/or
wherein the first support member (41) is closer to the motor shaft (22) than the second support member (42) in a horizontal direction perpendicular to the motor shaft (22),
and/or
wherein the mounting section (24) comprises at least one foot, preferably at least three feet, and more preferably four feet, and wherein the first alignment portion (31) comprises a height adjustment member, preferably a shim, provided below each of the at least one foot.

4. A conveyor drive system (1) according to any one of the preceding claims, wherein the connecting portion (50) is a fixed connection, preferably a bolted connection.

5. A conveyor drive system (1) according to any one of the preceding claims, wherein the connecting portion (50) is a pivot connection with at least one degree of freedom, and optionally, is also adjustable in a horizontal direction, and optionally,
the pivot has a pivot axis parallel to an axis of the motor shaft (22) or the pulley shaft (2).

6. A conveyor drive system (1) according to any one of the preceding claims, wherein the pulley shaft (2) supports less than 50%, preferably less than 10%, and more preferably less than 5% of a weight of the motor (20) or a total weight of the motor (20) and the base frame (10), and/or
wherein the coupling (60) is a flexible coupling,
and/or
wherein the first alignment portion (31) and/or the second alignment portion (32) comprises shims.

7. A conveyor drive system (1) according to any one of the preceding claims, wherein the first support member (41) comprises two first support members (41) spaced apart from each other in a direction parallel to the axis of the motor shaft (22).

8. A conveyor drive system (1) according to claim 7, wherein the base frame (10) is connected to the support structure (40) by a three-support connection, having no more than three supports connecting the base frame (10) and the support structure (40), and/or wherein the base frame (10) is connected to the first support member (41) by the second alignment portion (32) providing two support connections, and to the second support (42) by the connecting portion (50) providing one support connection.

9. A conveyor drive system (1) according to any one of the preceding claims, further comprising a disk brake provided between the gearless motor (20) and the pulley shaft (2), wherein the disk brake comprises a floating brake caliper configured to compensate for displacement of a brake disk (71), and/or wherein the disk brake comprises a brake stand with a connected brake which is horizontally adjustable for alignment with the brake disk (71).

10. A conveyor drive system (1) according to any one of the preceding claims, wherein the motor (20) is at least one of a permanent magnet type and a synchronous motor type with external excitation, and an induction motor type, and wherein the motor (20) is preferably liquid-cooled or air-cooled.

11. A conveyor drive system (1) according to any one of the preceding claims, wherein the first support member (41) and/or the second support member (42) are made of steel beams, and/or concrete.

12. A conveyor drive system (1) according to any one of the preceding claims, wherein the coupling (60) is a straight coupling so that the axis of the motor shaft (22) and the axis of the pulley shaft (2) are concentric to each other.

13. An industrial conveyor installation having a conveyor belt and a conveyor drive system (1) according to any one of claims 1 to 12, for driving the conveyor belt via the pulley shaft (2).

14. The industrial conveyor installation according to claim 13, further comprising a rigid conveyor installation frame of the conveyor installation for supporting the pulley shaft (2),
wherein the support structure (40) is mounted to and supported by the conveyor installation frame.

15. A method of installing a conveyor drive system (1) according to any one of claims 1 to 12 in an industrial conveyor installation, the method comprising the steps of:
a. mounting the support structure (40) comprising the first support member (41) and the second support member (42) to a conveyor installation frame of the conveyor installation;
b. positioning the base frame (10), with the motor (20) mounted thereon, in alignment with the first support member (41) and connecting the base frame (10) to the second support member (42) by the connecting portion (50);
c. adjusting the second alignment portion (32) for coarse alignment of the motor shaft (22) with the pulley shaft (2), and mounting the base frame (10) to the first support member (41) via the second alignment portion (32);
d. adjusting the first alignment portion (31) for fine alignment of the motor shaft (22) with the pulley shaft (2); and
e. coupling the motor shaft (22) to the pulley shaft (2) by the coupling (60).

## Patentansprüche

1. Fördererantriebssystem (1) für eine industrielle Fördereranlage, wobei das Fördererantriebssystem (1) Folgendes umfasst:
eine Riemenscheibenwelle (2), die dazu ausgelegt ist, ein Förderband der Fördereranlage anzutreiben;
einen getriebelosen Motor (20) zum getriebelosen Antreiben der Riemenscheibenwelle (2), wobei der Motor (20) eine Motorwelle (22) und ein Motorgehäuse mit einem Montageabschnitt (24) umfasst;
einen Grundrahmen (10) zum Stützen des Motors (20);
einen ersten Ausrichtungsabschnitt (31), wobei der Motor (20) mit seinem Montageabschnitt (24) an dem Grundrahmen (10) montiert ist, wobei der erste Ausrichtungsabschnitt (31) zwischen dem Montageabschnitt (24) und dem Grundrahmen (10) bereitgestellt ist, um den Motor (20) zumindest vertikal relativ zu dem Grundrahmen (10) einzustellen;
eine Stützstruktur (40), die zum Stützen des Grundrahmens (10) ausgelegt ist, wobei die Stützstruktur (40) ein erstes Stützelement (41) und ein zweites Stützelement (42) umfasst, wobei das erste Stützelement (41) und das zweite Stützelement (42) in einer Richtung senkrecht zu einer axialen Richtung der Motorwelle (22) voneinander beabstandet sind;
einen zweiten Ausrichtungsabschnitt (32), der zwischen dem ersten Stützelement (41) und dem Grundrahmen (10) bereitgestellt ist, um den Grundrahmen (10) zumindest vertikal relativ zu dem ersten Stützelement (41) einzustellen;
einen Verbindungsabschnitt (50), der den Grundrahmen (10) mit dem zweiten Stützelement (42) verbindet; und
eine Kopplung (60), die die Motorwelle (22) getriebelos mit der Riemenscheibenwelle (2) verbindet und eine Fehlausrichtung zwischen der Motorwelle (22) und der Riemenscheibenwelle (2) ausgleicht.

2. Fördererantriebssystem (1) nach Anspruch 1, wobei der erste und der zweite Ausrichtungsabschnitt (31, 32) zum Ausrichten der Motorwelle (22) koaxial mit der Riemenscheibenwelle (2) eingestellt sind, und wobei optional
der zweite Ausrichtungsabschnitt (32) dazu ausgelegt ist, eine Grobeinstellung bereitzustellen, und der erste Ausrichtungsabschnitt (31) dazu ausgelegt ist, eine Feineinstellung bereitzustellen, und/oder ein vertikaler Einstellungsbereich des zweiten Ausrichtungsabschnitts (32) größer als ein vertikaler Einstellungsbereich des ersten Ausrichtungsabschnitts (31) ist.

3. Fördererantriebssystem (1) nach einem der vorhergehenden Ansprüche, wobei der erste Ausrichtungsabschnitt (31) unterhalb des Montageabschnitts (24) angeordnet ist und der zweite Ausrichtungsabschnitt (32) unterhalb des Grundrahmens (10) angeordnet ist,
und/oder
wobei sich das erste Stützelement (41) näher an der Motorwelle (22) als das zweite Stützelement (42) in einer horizontalen Richtung senkrecht zu der Motorwelle (22) befindet,
und/oder
wobei der Montageabschnitt (24) mindestens einen Fuß, vorzugsweise mindestens drei Füße und mehr bevorzugt vier Füße umfasst, und wobei der erste Ausrichtungsabschnitt (31) ein Höheneinstellelement, vorzugsweise eine Ausgleichsscheibe, umfasst, die unter jedem der ein oder mehreren Füße bereitgestellt ist.

4. Fördererantriebssystem (1) nach einem der vorhergehenden Ansprüche, wobei der Verbindungsabschnitt (50) eine feste Verbindung, vorzugsweise eine Schraubverbindung, ist.

5. Fördererantriebssystem (1) nach einem der vorhergehenden Ansprüche, wobei der Verbindungsabschnitt (50) eine Schwenkverbindung mit mindestens einem Freiheitsgrad ist und optional auch in einer horizontalen Richtung einstellbar ist, und wobei optional der Drehpunkt eine Schwenkachse parallel zu einer Achse der Motorwelle (22) oder der Riemenscheibenwelle (2) aufweist.

6. Fördererantriebssystem (1) nach einem der vorhergehenden Ansprüche, wobei die Riemenscheibenwelle (2) weniger als 50%, bevorzugt weniger als 10%, und mehr bevorzugt weniger als 5% eines Gewichts des Motors (20) oder eines Gesamtgewichts des Motors (20) und des Grundrahmens (10) trägt,
und/oder
wobei die Kopplung (60) eine flexible Kopplung ist,
und/oder
wobei der erste Ausrichtungsabschnitt (31) und/oder der zweite Ausrichtungsabschnitt (32) Ausgleichsscheiben umfassen.

7. Fördererantriebssystem (1) nach einem der vorhergehenden Ansprüche, wobei das erste Stützelement (41) zwei erste Stützelemente (41) umfasst, die in einer Richtung parallel zur Achse der Motorwelle (22) voneinander beabstandet sind.

8. Fördererantriebssystem (1) nach Anspruch 7, wobei der Grundrahmen (10) mit der Stützstruktur (40) durch eine Drei-Stützen-Verbindung verbunden ist, die nicht mehr als drei Stützen aufweist, die den Grundrahmen (10) und die Stützstruktur (40) verbinden, und/oder
wobei der Grundrahmen (10) mit dem ersten Stützelement (41) durch den zweiten Ausrichtungsabschnitt (32), der zwei Stützverbindungen bereitstellt, und mit der zweiten Stütze (42) durch den Verbindungsabschnitt (50), der eine Stützverbindung bereitstellt, verbunden ist.

9. Fördererantriebssystem (1) nach einem der vorhergehenden Ansprüche, ferner umfassend eine Scheibenbremse, die zwischen dem getriebelosen Motor (20) und der Riemenscheibenwelle (2) bereitgestellt ist, wobei die Scheibenbremse einen schwimmenden Bremssattel umfasst, der dazu ausgelegt ist, eine Verschiebung einer Bremsscheibe (71) zu kompensieren, und/oder wobei die Scheibenbremse einen Bremsständer mit einer verbundenen Bremse umfasst, die zur Ausrichtung mit der Bremsscheibe (71) horizontal verstellbar ist.

10. Fördererantriebssystem (1) nach einem der vorhergehenden Ansprüche, wobei der Motor (20) von einem Permanentmagnettyp und/oder einem Synchronmotortyp mit externer Erregung und/oder einem Induktionsmotortyp ist und wobei der Motor (20) vorzugsweise flüssigkeitsgekühlt oder luftgekühlt ist.

11. Fördererantriebssystem (1) nach einem der vorhergehenden Ansprüche, wobei das erste Stützelement (41) und/oder das zweite Stützelement (42) aus Stahlträgern und/oder Beton hergestellt sind.

12. Fördererantriebssystem (1) nach einem der vorhergehenden Ansprüche, wobei die Kopplung (60) eine gerade Kopplung ist, so dass die Achse der Motorwelle (22) und die Achse der Riemenscheibenwelle (2) konzentrisch zueinander sind.

13. Industrielle Fördereranlage mit einem Förderband und einem Fördererantriebssystem (1) nach einem der Ansprüche 1 bis 12 zum Antreiben des Förderbandes über die Riemenscheibenwelle (2).

14. Industrielle Fördereranlage nach Anspruch 13, ferner umfassend einen starren Fördereranlagenrahmen der Fördereranlage zum Stützen der Riemenscheibenwelle (2), wobei die Stützstruktur (40) an dem Fördereranlagenrahmen montiert ist und durch diesen gestützt wird.

15. Verfahren zum Installieren eines Fördererantriebssystems (1) nach einem der Ansprüche 1 bis 12 in einer industriellen Fördereranlage, wobei das Verfahren die folgenden Schritte umfasst:
a. Montieren der Stützstruktur (40), die das erste Stützelement (41) und das zweite Stützelement (42) umfasst, an einem Fördereranlagenrahmen der Fördereranlage;
b. Positionieren des Grundrahmens (10) mit dem darauf montierten Motor (20) in Ausrichtung mit dem ersten Stützelement (41) und Verbinden des Grundrahmens (10) mit dem zweiten Stützelement (42) durch den Verbindungsabschnitt (50);
c. Einstellen des zweiten Ausrichtungsabschnitts (32) zur Grobausrichtung der Motorwelle (22) mit der Riemenscheibenwelle (2) und Montieren des Grundrahmens (10) an dem ersten Stützelement (41) über den zweiten Ausrichtungsabschnitt (32);
d. Einstellen des ersten Ausrichtungsabschnitts (31) zur Feinausrichtung der Motorwelle (22) mit der Riemenscheibenwelle (2); und
e. Koppeln der Motorwelle (22) mit der Riemenscheibenwelle (2) durch die Kopplung (60).

## Revendications

1. Système d'entraînement de transporteur (1) pour une installation de transporteur industriel, le système d'entraînement de transporteur (1) comprenant :
un arbre de poulie (2) configuré pour entraîner une bande transporteuse de l'installation de transporteur ;
un moteur sans engrenage (20) destiné à entraîner sans engrenage l'arbre de poulie (2), le moteur (20) comprenant un arbre de moteur (22) et un carter de moteur présentant une section de montage (24) ;
un bâti de base (10) pour supporter le moteur (20) ;
une première partie d'alignement (31), le moteur (20) étant monté avec sa section de montage (24) sur le bâti de base (10), la première partie d'alignement (31) étant placée entre la section de montage (24) et le bâti de base (10) pour ajuster le moteur (20) au moins verticalement par rapport au bâti de base (10) ;
une structure de support (40) configurée pour supporter le bâti de base (10), la structure de support (40) comprenant un premier élément de support (41) et un second élément de support (42), le premier élément de support (41) et le second élément de support (42) étant espacés l'un de l'autre dans une direction perpendiculaire à une direction axiale de l'arbre moteur (22) ;
une seconde partie d'alignement (32) placée entre le premier élément de support (41) et le bâti de base (10) pour ajuster le bâti de base (10) au moins verticalement par rapport au premier élément de support (41) ;
une partie de raccordement (50) reliant le bâti de base (10) au second élément de support (42) ; et
un accouplement (60) accouplant sans engrenage l'arbre de moteur (22) à l'arbre de poulie (2) et compensant tout défaut d'alignement entre l'arbre de moteur (22) et l'arbre de poulie (2).

2. Système d'entraînement de transporteur (1) selon la revendication 1, dans lequel les première et seconde parties d'alignement (31, 32) sont ajustées pour aligner coaxialement l'arbre de moteur (22) avec l'arbre de poulie (2), et éventuellement,
dans lequel la seconde partie d'alignement (32) est configurée pour assurer un ajustement approximatif et la première partie d'alignement (31) est configurée pour assurer un ajustement précis, et/ou une plage d'ajustement vertical de la seconde partie d'alignement (32) est plus grande qu'une plage d'ajustement vertical de la première partie d'alignement (31).

3. Système d'entraînement de transporteur (1) selon l'une quelconque des revendications précédentes, dans lequel la première partie d'alignement (31) est placée au-dessous de la section de montage (24) et la seconde partie d'alignement (32) est placée au-dessous du bâti de base (10),
et/ou
dans lequel le premier élément de support (41) est plus près de l'arbre de moteur (22) que le second élément de support (42) dans une direction horizontale perpendiculaire à l'arbre de moteur (22),
et/ou
dans lequel la section de montage (24) comprend au moins un pied, de préférence au moins trois pieds, et plus préférablement quatre pieds, et dans lequel la première partie d'alignement (31) comprend un élément d'ajustement de hauteur, de préférence une cale, placé sous chacun des pieds.

4. Système d'entraînement de transporteur (1) selon l'une quelconque des revendications précédentes, dans lequel la partie de raccordement (50) est un raccordement fixe, de préférence un raccordement boulonné.

5. Système d'entraînement de transporteur (1) selon l'une quelconque des revendications précédentes, dans lequel la partie de raccordement (50) est un raccordement à pivot avec au moins un degré de liberté, et facultativement, est également ajustable dans une direction horizontale, et facultativement,
le pivot présente un axe de pivotement parallèle à un axe de l'arbre de moteur (22) ou de l'arbre de poulie (2).

6. Système d'entraînement de transporteur (1) selon l'une quelconque des revendications précédentes, dans lequel l'arbre de poulie (2) supporte moins de 50 %, de préférence moins de 10 %, et plus préférablement moins de 5 % d'un poids du moteur (20) ou d'un poids total du moteur (20) et du bâti de base (10),
et/ou
dans lequel l'accouplement (60) est un accouplement flexible,
et/ou
dans lequel la première partie d'alignement (31) et/ou la seconde partie d'alignement (32) comprennent des cales.

7. Système d'entraînement de transporteur (1) selon l'une quelconque des revendications précédentes, dans lequel le premier élément de support (41) comprend deux premiers éléments de support (41) espacés l'un de l'autre dans une direction parallèle à l'axe de l'arbre de moteur (22).

8. Système d'entraînement de transporteur (1) selon la revendication 7, dans lequel le bâti de base (10) est relié à la structure de support (40) par un raccordement à trois supports, n'ayant pas plus de trois supports reliant le bâti de base (10) et la structure de support (40), et/ou
dans lequel le bâti de base (10) est relié au premier élément de support (41) par la seconde partie d'alignement (32) fournissant deux raccordements de support, et au second support (42) par la partie de raccordement (50) fournissant un raccordement de support.

9. Système d'entraînement de transporteur (1) selon l'une quelconque des revendications précédentes, comprenant en outre un frein à disque placé entre le moteur sans engrenage (20) et l'arbre de poulie (2), dans lequel le frein à disque comprend un étrier de frein flottant configuré pour compenser tout déplacement d'un disque de frein (71), et/ou dans lequel le frein à disque comprend un support de frein avec un frein relié qui est ajustable horizontalement pour être aligné avec le disque de frein (71).

10. Système d'entraînement de transporteur (1) selon l'une quelconque des revendications précédentes, dans lequel le moteur (20) est au moins l'un d'un moteur de type à aimant permanent et d'un moteur de type synchrone avec excitation externe, et d'un moteur de type à induction, et dans lequel le moteur (20) est de préférence refroidi par liquide ou refroidi par air.

11. Système d'entraînement de transporteur (1) selon l'une quelconque des revendications précédentes, dans lequel le premier élément de support (41) et/ou le second élément de support (42) sont faits de poutres d'acier et/ou de béton.

12. Système d'entraînement de transporteur (1) selon l'une quelconque des revendications précédentes, dans lequel l'accouplement (60) est un accouplement droit de sorte que l'axe de l'arbre de moteur (22) et l'axe de l'arbre de poulie (2) soient mutuellement concentriques.

13. Installation de transporteur industriel ayant une bande transporteuse et un système d'entraînement de transporteur (1) selon l'une quelconque des revendications 1 à 12, pour entraîner la bande transporteuse par l'intermédiaire de l'arbre de poulie (2).

14. Installation de transporteur industriel selon la revendication 13, comprenant en outre un bâti rigide d'installation de transporteur de l'installation de transporteur pour supporter l'arbre de poulie (2),
dans laquelle la structure de support (40) est montée sur le bâti d'installation de transporteur et supportée par celui-ci.

15. Procédé d'installation d'un système d'entraînement de transporteur (1) selon l'une quelconque des revendications 1 à 12 dans une installation de transporteur industriel, le procédé comprenant les étapes suivantes :
a. monter la structure de support (40) comprenant le premier élément de support (41) et le second élément de support (42) sur un bâti d'installation de transporteur de l'installation de transporteur ;
b. positionner le bâti de base (10), avec le moteur (20) monté sur celui-ci, dans l'alignement du premier élément de support (41) et relier le bâti de base (10) au second élément de support (42) par le biais de la partie de raccordement (50) ;
c. ajuster la seconde partie d'alignement (32) pour un alignement approximatif de l'arbre de moteur (22) avec l'arbre de poulie (2), et monter le bâti de base (10) sur le premier élément de support (41) par l'intermédiaire de la seconde partie d'alignement (32) ;
d. ajuster la première partie d'alignement (31) pour un alignement précis de l'arbre de moteur (22) avec l'arbre de poulie (2) ; et
e. accoupler l'arbre de moteur (22) à l'arbre de poulie (2) par le biais de l'accouplement (60).
